# EUROPEAN PATENT SPECIFICATION

(11) **EP 2 401 168 B1**
(45) Date of publication and mention of the grant of the patent: **01.01.2014**
(21) Application number: 10705057.7
(22) Date of filing: 18.02.2010
(51) Int. Cl.: B60K 15/04

(54) **CLOSING DEVICE FOR AN OPENING PROVIDED ON A MOTOR VEHICLE**
VERSCHLUSSEINRICHTUNG FÜR EINE ÖFFNUNG AN EINEM KRAFTFAHRZEUG
DISPOSITIF DE FERMETURE POUR UNE OUVERTURE DANS UN VÉHICULE À MOTEUR

(30) Priority: 25.02.2009 DE 102009010323
(43) Date of publication of application: 04.01.2012
(73) Proprietor: Illinois Tool Works Inc., Glenview, IL 60026 (US)
(72) Inventor: BECK, Christian, DE-97285 Röttingen (DE)
(74) Representative: Hauck Patent- und Rechtsanwälte
(86) International application number: PCT/US2010/024521
(87) International publication number: WO 2010/099015

(56) References cited:
- DE-A1-102007 000 455
- US-A1- 2008 308 180
- US-B1- 6 968 874

## Description

The invention relates to a closing device for an opening provided on a motor vehicle for temporarily inserting an object, comprising: a closing flap for the opening, which is pivotally supported on a component between a closing position closing the opening and a releasing position allowing the insertion of the object, wherein the closing flap is biased to the closing position, and a locking device which, in a locking position, locks the closing flap in the closing position and which, in an unlocking position, unlocks the closing flap, so that the closing flap can be swiveled from the closing position to the releasing position by the object to be inserted into the opening. Closing devices of this type are used, for example, for closing and releasing filling openings for dispensing fuel. In particular, there are known so-called capless closing systems in which the tank neck has no separate tank cap. Instead, in these systems a closing flap is provided on the opening, which closing flap is pushed open by the filling nozzle to be inserted and, upon withdrawal of the filling nozzle, returns automatically to the closing position because of a bias generated by a spring. In this case there is a problem that, for example, a high-pressure water cleaner used for cleaning might force the closing cap open and water and other contaminants might therefore enter the opening. This is especially unacceptable with vehicles operated with diesel fuel. To avoid this, the spring force provided to bias the flap to the closing position must be comparatively large in order to prevent unwanted opening at all times. However, this leads to a requirement for a high pressure force when inserting the filling nozzle, which is detrimental to operating convenience.

It is therefore proposed in DE 103 07 355 B4 to provide two sealing planes arranged one behind the other in the direction of the opening, the outer sealing plane protecting the opening against penetration of contaminants and the inner sealing plane preventing the egress of fuel. The outer sealing plane is formed by a closing slider which is movable in a plane perpendicular to the axis of the opening when the filling nozzle is inserted. The inner sealing plane is formed by a spring-biased closing flap which is swiveled open against the spring when the filling nozzle is inserted. In this way the function of each of the sealing planes can be optimized and the forces required for opening are small.

A filler neck with a slotted actuating ring is known from EP 1 712 398 A1. This actuating ring is spread apart upon insertion of a diesel filling nozzle of relatively large diameter, releasing the filling opening. When a petrol filling nozzle of relatively small diameter is inserted, however, the ring is not spread apart, so that the filling opening remains locked. In this way incorrect filling is eliminated. For the same purpose, EP 1 284 212 A1 proposes a throttle element arranged in the filling opening which cooperates with a transmission element arranged upstream of the throttle element in such a manner that, upon actuation of the transmission element, the throttle element releases the filling opening for fuelling. Otherwise, the throttle element restricts the filling opening in such a manner that, because of the automatic switch-off mechanism of the filling nozzle, only a small quantity of fuel can be dispensed. The transmission element is actuated only by a relatively large diesel filling nozzle but not by a relatively small petrol filling nozzle. However, these known devices have a split construction and are comparatively complex and expensive to produce. Furthermore, they cannot always reliably prevent the penetration of dust and water into the opening.

From DE 10 2007 000 455 A1 a closing device according to the preamble of claim 1 is known. This device for opening and closing a fuel tank comprises a locking mechanism with two locking bodies being arranged oppposite to one another and having two opposite inclined surfaces. Upon insertion of a fuel nozzle, the nozzle comes into contact with the inclined surfaces and pushes the two locking bodies towards each other thereby releasing the fuel cap. A fuel nozzle guiding mechanism is provided on the fuel cap in order to center the fuel nozzle on the cap such that the two inclined surfaces are engaged at the same time by the fuel nozzle. The known device is complicated in construction because additional measures are necessary in order to center the fuel nozzle.

Starting from the prior art, it is the object of the invention to make available a closing device of the type mentioned in the introduction which is simple and inexpensive to produce, which prevents unwanted penetration of contaminants or water at all times and at the same time is very convenient to operate.

This object is achieved according to the invention by the subject matter of claim 1. Advantageous configurations are to be found in the dependent claims, the description and the figures.

For a closing device of the type mentioned in the introduction, the invention achieves the object in that the locking device has at least one locking projection which projects from the outer surface of the closing flap in the locking position, wherein the locking projection is biased to the locking position and may be pressed to the unlocking position by a force exerted on the locking projection by the object upon insertion in the opening, in which unlocking position the closing flap is unlocked.

The opening may be, for example, the filling opening of a tank neck for fuelling. The object to be inserted is then the filling nozzle. The filling opening may be, in particular, a tank neck without a tank cap, that is, a so-called "capless fuelling system". However the opening may also be, for example, an access to an electric plug connection for supplying the motor vehicle with electrical energy, for example in the case of electric vehicles. The object to be inserted may then be an electric plug. In that case, likewise, no additional cap needs to be provided, so that this system may also be capless. According to the invention only one sealing plane has to be provided, namely the sealing plane provided by the closing flap. It directly releases the opening to give access, for example, to the filler pipe for fuel or the electric socket. A further cap with a sealing function is not required. It may be provided, however, that the space containing the closing device, formed, for example, by a filler recess, is visually protected by a covering flap provided on the outside of the vehicle body.

The closing or sealing flap may have a circular shape and is swiveled in a known fashion between the closing position and the releasing position. In particular, it is swiveled inwardly about a pivot axis disposed perpendicularly to the axial direction of the opening. The component on which the closing flap is pivotally supported may be a part of the closing device, in particular a recess arranged in the vehicle body, for example a filler recess or the like. However, the component may also be another part. In the closing position the closing flap closes the opening in a sealed manner against the penetration of, for example, dust, water or the like. For this purpose it may bear against the rim of the opening with a suitable seal.

In the locking position, the locking device prevents the closing flap from swiveling open. According to the invention, a projection in the form of a narrow unlocking strip or the like is provided on the outer surface of the closing flap. The outer surface of the flap is a surface with which the object, for example the filling nozzle or the plug, comes into contact as it is inserted in the opening. In this case the object also comes into contact with the locking projection. A force exerted by the object on the projection, in particular in the axial direction of the opening, produces an inward movement of the projection and therefore unlocks the flap. It can now be swiveled open as the object is pressed further on the flap in the direction of the opening. The flap thereby releases the opening for complete insertion of the object. Fuelling or electric charging of the motor vehicle, for example, can then take place.

The closing flap is biased to the closing position, for example by a spring. Because of this bias the closing flap automatically moves back from the releasing position to the closing position when the object is removed from the opening, for example after fuelling or charging. The projection is also biased to the locking position. It therefore also moves back automatically from the unlocking position to the locking position as soon as the object is removed from the opening. The bias of the projection may also be effected by means of a suitable spring.

The outer surface of the projection may be, for example, rectangular, and has an area multiple times smaller in comparison to the outer surface of the flap. For example, the outer surface area of the locking projection may be, for example, less than 10%, preferably less than 5%, of the area of the closing flap. For this reason the surface pressure exerted on the projection by, for example, a high pressure water cleaner is not sufficient to move same to the unlocking position. Accidental swiveling open of the flap, and therefore penetration of water, are reliably prevented without the need for the bias of the closing flap, provided, for example, by a spring, to be selected undesirably strong. At the same time, the force to be exerted when inserting the object for unlocking the projection is also small, further enhancing convenience.

According to the invention, therefore, a closing flap is equipped with an integrated locking mechanism which, in the locking position of the closing flap, securely protects the opening against the penetration of contaminants and water at all times. The device can be produced simply and inexpensively, for example in an injection molding process. In this case it can be made partially or completely from a plastics material, apart from the springs, for example. In addition, the device is easy to clean. The capless system according to the invention is also distinguished by a flat construction.

The locking device further has at least one catch projecting in a radial direction beyond the circumference of the closing flap in the locking position and engaging in at least one recess in the component, which catch or catches is/are retracted from the recess/es in the closing flap upon moving of the locking projection to the unlocking position, thus releasing the lock. The catch is a locking slider. In this case in particular a plurality of catches, for example two, may be provided. They may have a lug-like configuration, so that their catches engage in corresponding openings of the component in the locking position, thus reliably preventing the closing flap from swiveling open. The catches may be biased to the locking position, for example by a spring. It may then be further provided, in an especially simple manner constructionally, that the catch is biased by a spring to the position projecting radially beyond the circumference of the closing flap, and that this spring also produces the bias of the locking projection to the locking position.

The locking projection actuates the at least one catch via a connecting element extending through the outer surface of the closing flap. In this case the connecting element may be formed integrally with the locking projection, for example by an injection molding process. The projection and the catch are therefore located on different sides of the plane extending through the outer surface of the closing flap. Their effect on one another is realized by the connecting element. A force exerted on the projection by the object to be inserted is transferred directly from the projection via the connecting element to the catch or catches. In this way the forces to be exerted for unlocking are especially small, so that convenience of use is further enhanced. In this case a suitable seal, for example a sealing lip, which prevents the penetration of contaminants and/or water is provided between the locking projection and the surface of the closing flap. With regard to production, such a seal can be molded-on in an especially simple manner in the injection molding process. It may be made of a softer material, in particular a softer plastics material, than the closing flap and the locking projection.

The locking projection is swivelable jointly with the connecting element between the locking position and the unlocking position, thus actuating the catch. For example, the connecting element may be in abutment with the catch or with a support including the catch and, upon swiveling, may move the catch or the support translationally, so that the catch is withdrawn from the opening. In this way the unlocking is achieved in an especially simple manner. The swiveling may also take place about an axis disposed perpendicularly to the axial direction of the opening. The pivot axis may be, in particular, parallel to the pivot axis of the closing flap.

According to a further configuration the component may be a tubular plastic attachment for the opening which has a second opening aligned with the opening in the vehicle, which second opening is closed by the closing flap in the closing position and is released for insertion of the object in the releasing position. This plastic attachment may in turn be fastened to a further component of the motor vehicle, for example a (filler) recess or the like. The plastic attachment is placed on the opening, for example a filling opening. The closing flap may then be supported pivotally on the plastic attachment. In the closing position it closes the opening of the attachment and therefore the opening of the motor vehicle aligned thereto.

According to a further configuration the plastic attachment may have a first and a second sealing ring molded-on in the injection molding process and made of a softer material than the plastic attachment, the rim of the closing flap abutting the first sealing ring and the plastic attachment abutting the rim of the opening of the motor vehicle with the second sealing ring in the closing position. In addition, it may be provided that the plastic attachment has a valve molded-on in the injection molding process and made of a softer material than the plastic attachment, which valve allows a pressure compensation between the interior of the opening and the external environment when the closing flap is closed. A two-component method for producing the plastic attachment is therefore used. Production using the injection molding process is especially simple and therefore inexpensive. Furthermore, the molded-on sealing rings and the valve also have an especially simple configuration. The seals and the valve may also be made of a plastics material. The valve enables a pressure compensation on both sides in a manner which is especially simple to produce, without a complex and cost-intensive design with seals and springs. In order to fulfill safety and emissions requirements, a gas-tight closing flap with a second valve (Primary Shutoff Valve or PSV) located further inwards may additionally be required.

An exemplary embodiment of the invention is explained in more detail below with reference to a drawing, in which:
Fig. 1 shows schematically a closing device according to the invention in a cross section in a first operating position;
Fig. 2 shows schematically a detail from Fig. 1 in an enlarged representation;
Fig. 3 shows schematically three perspective views of the inventive closing device in a first operating position;
Fig. 4 shows schematically three perspective views of the closing device represented in Fig. 3 in a second operating position;
Fig. 5 shows schematically three perspective views of the closing device represented in Fig. 3 in a third operating position;
Fig. 6 is a schematic representation of the view shown in Fig. 3a) from below, and
Fig. 7 shows schematically a cross section along the line 7-7 in Fig. 6.

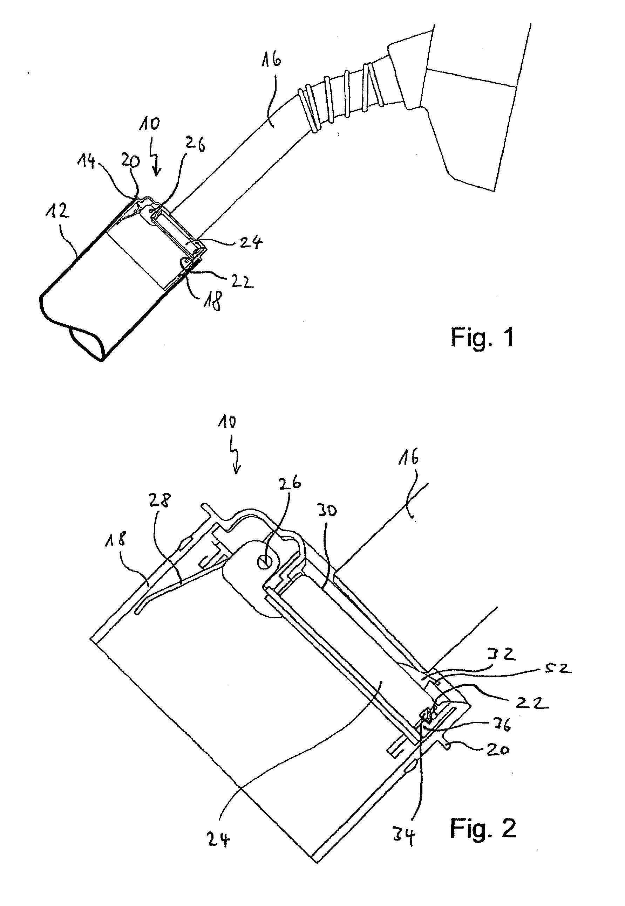

In the figures the same reference numerals refer to the same objects unless otherwise stated. Fig. 1 shows a closing device 10 according to the invention in a first operating position. A filler pipe 12 of a motor vehicle (not shown) for filling the tank with fuel can be seen. At its outer end the filler pipe 12 has an opening 14. The opening 14 serves for introducing an object 16, here a filling nozzle 16. A component 18, here a tubular plastic attachment 18, is inserted with its outer surface in the opening 14 of the filler pipe 12 and is retained therein by a collar 20. The plastic attachment 18 is sealed with respect to the rim of the opening 14 in a manner to be explained in more detail below. The plastic attachment 18 has a second opening 22 which is aligned with the opening 14 and is of a size such that the filling nozzle 16 can be inserted therein. A closing flap 24 is supported pivotally on the plastic attachment 18 via a pivot axis 26 disposed perpendicularly to the axial direction of the openings 14, 22. In the closing position shown in Fig. 1, it closes the opening 22 in the plastic attachment 18 and therefore the opening 14 in the filler pipe 12 in a sealed manner with respect to the external environment and, in particular, with respect to the penetration of dust, water and other contaminants.

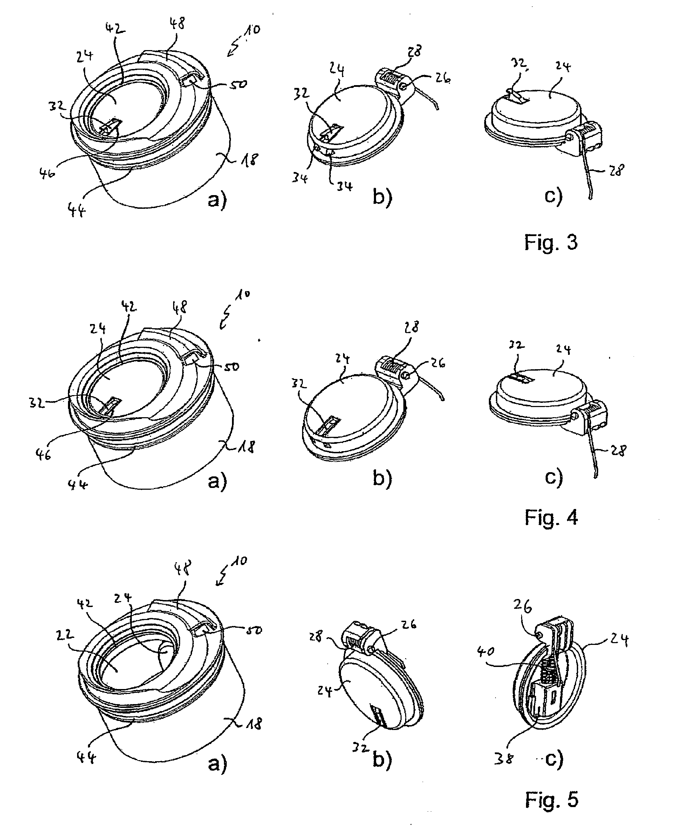

The operation of the closing flap 24 will now be explained in more detail with reference to Fig. 2, which is an enlarged representation of a detail from Fig. 1. For reasons of simplicity the filler pipe 12 is not shown in Fig. 2. It can be seen that the closing flap 24, which has a cylindrical basic shape, is biased in known fashion via a compression spring 28 to the closing position shown in Fig. 2. It can also be seen that a locking projection 32 projects from the outer surface 30 of the closing flap 24. The locking projection 32 forms part of a locking device. Its outer surface area is multiple times smaller than the outer surface area 30 of the closing flap 24. In Fig. 2 the locking projection 32 is shown in its locking position. The locking projection 32 has a substantially rectangular outer surface which, in the locking position, projects from the closing flap 24 at an angle to the outer surface 30 thereof. The locking device further includes two lug-shaped catches 34 which project beyond the circumference of the closing flap 24 in the locking position shown in Fig. 2 and engage in a recess 36 in the plastic attachment 18. If it is attempted, in the state shown in Fig. 2, to swivel the closing flap 24 open inwards, the catches 34 strike against a lower boundary of the recess 36 and thus prevent the closing flap 24 from swiveling open. The locking device further comprises a connecting element (not shown in Fig. 2) which in the state shown in Fig. 2 extends through the outer surface 30 of the closing flap 24 and includes integrally the locking projection 32. A housing 38 which receives the connecting element can be seen in Fig. 5c). Also to be seen in Fig. 5c) is a compression spring 40 which biases both the catches 34 and the locking projection 32 to the locking position shown in Fig. 2.

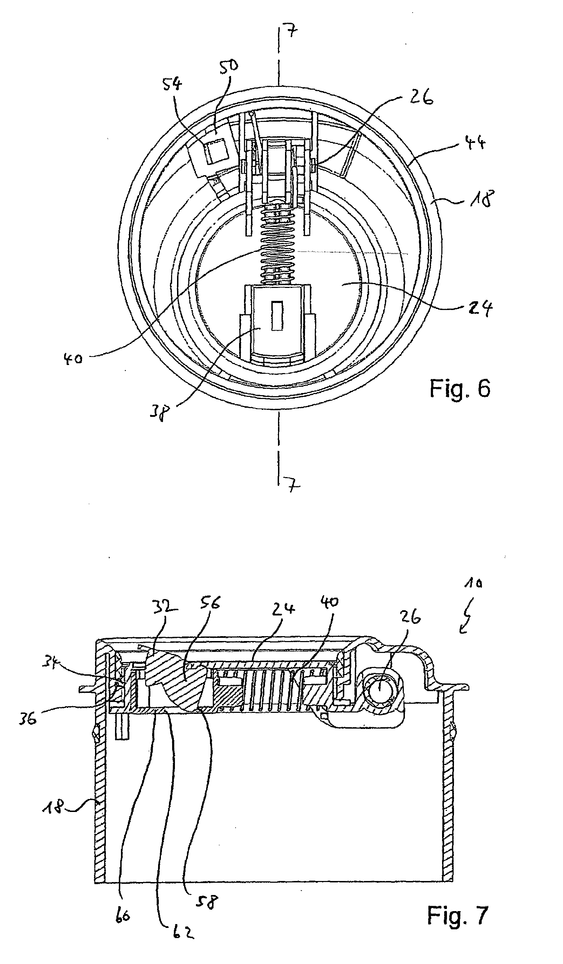

In Figs. 3, 4 and 5 the respective left-hand parts a) of the figures show the closing device 10 according to the invention in different operating positions, in a perspective view from above. The respective partial images b) show the closing flap 24 with the locking device in different operating positions, also in a perspective view. The partial images c) of Figs. 3, 4 and 5 show the closing flap in different operating positions in further perspective views. In the partial images b) and c) the plastic attachment 18 is not shown for reasons of clarity. It can further be seen in the partial images a) of Figs. 3, 4 and 5 that the plastic attachment 18 has a first sealing ring 42 on the inner rim of the opening 22 of the plastic attachment 18. In addition, the plastic attachment 18 has on its outer periphery a second sealing ring 44. Both sealing rings 42, 44 are made of a softer plastics material than the plastic attachment 18 and were molded onto the plastic attachment 18 in an injection molding process. The outer sealing ring 44 takes over the function of sealing the attachment 18 with respect to the opening 14 in the filler pipe 14. In particular, the plastic attachment 18 rests with this sealing ring 44 against the rim of the opening 14 of the filler pipe 12 (not shown in Figs. 3, 4 and 5) when inserted in the filler pipe 12. By comparison, the rim of the closing flap 24 rests against the first sealing ring 42 in the closing position. The sealing rings 42, 44 therefore ensure in a simple manner the sealing of the filler pipe 12 with respect to the external environment in the closed state of the closing flap 24. A seal 46 made of a softer plastics material and molded-on in the injection molding process is provided between the locking projection 32 and the edge of the opening provided for it in the closing flap 24. A cover 48 arranged on the upper side of the plastic attachment can further be seen in Figs. 3a), 4a) and 5a). Below this cover 48 is located the external access of a valve 50 made of a softer plastics material than the plastic attachment 18 and molded onto the plastic attachment 18 in the injection molding process. On its underside shown in Fig. 6 the valve 50 has a soft wall 54 provided with a slit, enabling a pressure compensation between the interior of the filler pipe 12 and the external environment when the closing flap 24 is closed.

The connecting element 56 which passes through the outer surface of the closing flap 24 and is formed integrally with the projection 32 can be seen in Fig. 7. On its underside the connecting element 56 has an abutment face 58 which is in abutment with a carrier 60 supporting the catches 34. For this purpose the carrier 60 has an opening 62. The carrier 60 with the catches 34 and the connecting element 56 with the locking projection 32 are biased to the locking position by the spring 40.

The operation of the closing device is explained in more detail as follows. In order to fill the fuel tank of the motor vehicle via the filler pipe 12, the filling nozzle 16 is pressed on the closing flap 24 in the region of the opening 22. As this happens the underside of the filling nozzle 16 first comes into contact with the outer surface of the locking projection 32, as can be seen in Fig. 2. The force exerted by the filling nozzle 16 in the axial direction of the openings 22, 14 presses the projection 32 inwards in the direction of the openings 22, 14 from the locking position shown in Figs. 2 and 3 to the unlocking position shown in Fig. 4. In particular, the locking projection 32, together with the connecting element 56, is swiveled inwards by the force exerted by the filling nozzle 16 about an axis disposed parallel to the pivot axis 26 of the closing flap 24. As this happens the connecting element 56 causes a translational movement of the carrier 60, and therefore of the catches 34, against the spring 40 via the dog 58 located in the opening 62 of the carrier 60 of the catches 34. The locking projection 32 is moved correspondingly into the closing flap 24. In this position the upper side of the locking projection 32 ends substantially flush with the outer surface 30 of the closing flap 24. In this case only an extension 52 of the locking projection 32 comes into contact with a lower abutment face (not shown). The swiveling of the locking projection 32 and of the connecting element 56 therefore causes a movement of the catches 34, which are thereby retracted in a radial direction from the recess 36 in the plastic attachment 18 into the closing flap 24, as can be seen in Fig. 4b). In this state the closing flap 24 is unlocked and can be swiveled open inwards about the axis 26 by further pressing of the filling nozzle 16 in the direction of the openings 22, 14 against the spring force of the spring 28, as shown in Fig. 5. In this state the motor vehicle can be fuelled via the filler pipe 12.

After the fuelling process has ended the filling nozzle 16 is withdrawn from the filler pipe 12 and in particular from the openings 14 and 22. Because of the bias of the closing flap 24 effected by the spring 28, the closing flap 24 automatically moves back to the closing position shown in Fig. 4. Because of the bias of the catches 34 and therefore of the locking projection 32 further effected by the compression spring 40, said catches 34 and locking projection 32 also move back to the locking position shown in Figs. 2 and 3. The opening 14 of the filler pipe 12 is therefore again securely protected against penetration of contaminants or water from outside.

Only a comparatively small force needs to be applied by the filling nozzle 16 in the axial direction of the openings 22, 14 in order to unlock and then open the closing flap 24. At the same time, because of the small external surface area of the projection 32 in comparison to the external surface area 30 of the closing flap 24, a surface pressure exerted, for example, by a high-pressure cleaner is not sufficient to move the locking projection 32 to the unlocking position. Penetration of, for example, water in the course of cleaning is thereby reliably avoided.

The plastic attachment 18 may be produced especially simply and substantially in one piece in an injection molding process. The same applies to the closing flap 24 and to the locking device with the locking projection 32, to the catches 34 and to the connecting element 56. The closing device according to the invention can therefore be produced simply and at low cost. In addition, the device has a flat structural shape.

Although the opening 14 of a filler pipe 12 for a tank of the motor vehicle and the insertion of a filling nozzle 16 is illustrated in the figures as an opening in the vehicle, the opening may self-evidently be a different opening and the object 16 may correspondingly be a different object. An opening in the motor vehicle leading to an electric plug-in connection for electric charging of an electric vehicle may be mentioned as an example. The object to be inserted in the opening is then an electric plug connector.

## Claims

1. A closing device for an opening (14) provided on a motor vehicle for temporarily inserting an object (16), comprising:
- a closing flap (24) for the opening (14), which is pivotally supported on a component (18) between a closing position closing the opening, and a releasing position allowing the insertion of the object (16), wherein the closing flap (24) is biased into the closing position,
- a locking device, which, in a locking position, locks the closing flap (24) in the closing position and which, in an unlocking position, unlocks the closing flap (24), so that the closing flap (24) can be pivoted from the closing position into the releasing position by the object (16) to be inserted into the opening (14),
wherein the locking device has at least one locking projection (32) projecting from the outer surface (30) of the closing flap (24) in the locking position, wherein the locking projection (32) is biased into the locking position and may be pressed into the unlocking position through a force exerted onto the locking projection (32) by the object (16) upon insertion into the opening (14), in which unlocking position the closing flap (24) is unlocked,
- wherein the locking device further comprises at least one catch (34) projecting over the circumference of the closing flap (24) in the radial direction and engaging in at least one recess (36) in the component (18) in the locking position, said catch (34) upon movement of the locking projection (32) into the unlocking position is retracted from the recess (36) into the closing flap (24) and thus releases the locking, and
- wherein the locking projection (32) engages the at least one catch (34) through a connecting element (56) extending through the outer surface (30) of the closing flap (24),
**characterised in that** the locking projection (32) is pivotable together with the connecting element (56) between the locking position and the unlocking position and thus engages the catch (34).

2. The closing device as claimed in claim 1, wherein the catch (34) is biased into the position projecting over the circumference of the closing flap (24) in the radial direction by a spring (40), and wherein this spring (40) also provides the bias of the locking projection (32) into the locking position.

3. The closing device according to one of the preceding claims, wherein the component (18) is a tubular plastic attachment (18) for the opening (14), said tubular plastic attachment (18) comprising a second opening (22) being aligned with the opening (14) in the motor vehicle, said second opening (22) being closed by the closing flap (24) in the closing position and being released for insertion of the object (16) in the releasing position.

4. The closing device as claimed in claim 3, wherein the plastic attachment (18) comprises a first and a second sealing ring (42, 44), being injected in an injection moulding process and being of a softer material than the plastic attachment (18), wherein the closing flap (24) abuts with its rim on the first sealing ring (42) in the closing position, and wherein the plastic attachment (18) abuts on the rim of the opening (14) of the motor vehicle with the second sealing ring (44).

5. The closing device according to one of the claims 3 or 4, wherein the plastic attachment (18) comprises a valve (50) injected in an injection moulding process and being of a softer material than the plastic attachment (18), said valve with the closing flap (24) closed, allowing a pressure compensation between the inside of the opening (14) and the outer environment.

## Patentansprüche

1. Verschlusseinrichtung für eine Öffnung (14) an einem Kraftfahrzeug zum vorübergehenden Einführen eines Gegenstands (16), umfassend:
- eine Verschlussklappe (24) für die Öffnung (14), die an einem Bauteil (18) zwischen einer Verschlussposition, die die Öffnung verschließt, und einer Freigabeposition, die das Einführen des Gegenstands (16) gestattet, schwenkbar gestützt ist, wobei die Verschlussklappe (24) in die Verschlussposition vorgespannt ist,
- eine Verriegelungsvorrichtung, die in einer Verriegelungsposition die Verschlussklappe (24) in der Verschlussposition verriegelt und in einer Entriegelungsposition die Verschlussklappe (24) entriegelt, so dass die Verschlussklappe (24) durch den in die Öffnung (14) einzuführenden Gegenstand (16) aus der Verschlussposition in die Freigabeposition geschwenkt werden kann,
- wobei die Verriegelungsvorrichtung mindestens einen Verriegelungsvorsprung (32) hat, der von der Außenfläche (30) der Verschlussklappe (24) in der Verriegelungsposition vorragt, wobei der Verriegelungsvorsprung (32) in die Verriegelungsposition vorgespannt ist und durch eine Kraft, die durch den Gegenstand (16) bei der Einführung in die Öffnung (14) auf den Verriegelungsvorsprung (32) ausgeübt wird, in die Entriegelungsposition gedrückt werden kann, in der die Verschlussklappe (24) entriegelt ist,
- wobei die Verriegelungsvorrichtung ferner mindestens eine Arretierung (34) umfasst, die in der radialen Richtung über den Umfang der Verschlussklappe (24) vorragt, in der Verriegelungsposition in mindestens eine Ausnehmung (36) im Bauteil (18) eingreift und bei Bewegung des Verriegelungsvorsprungs (32) in die Entriegelungsposition aus der Ausnehmung (36) in die Verschlussklappe (24) zurückgezogen wird und somit die Verriegelung freigibt, und
- wobei der Verriegelungsvorsprung (32) die mindestens eine Arretierung (34) durch ein sich durch die Außenfläche (30) der Verschlussklappe (24) erstreckendes Verbindungselement (56) in Eingriff nimmt,
**dadurch gekennzeichnet, dass** der Verriegelungsvorsprung (32) zusammen mit dem Verbindungselement (56) zwischen der Verriegelungsposition und der Entriegelungsposition schwenkbar ist und somit die Arretierung (34) in Eingriff nimmt.

2. Verriegelungsvorrichtung nach Anspruch 1, wobei die Arretierung (34) durch eine Feder (40) in die in der radialen Richtung über den Umfang der Verschlussklappe (24) vorragende Position vorgespannt ist und wobei diese Feder (40) auch dafür sorgt, dass der Verriegelungsvorsprung (32) in die Verriegelungsposition vorgespannt ist.

3. Verriegelungsvorrichtung nach einem der vorhergehenden Ansprüche, wobei das Bauteil (18) ein rohrförmiger Kunststoffansatz (18) für die Öffnung (14) ist, der eine zweite Öffnung (22) umfasst, die auf die Öffnung (14) im Kraftfahrzeug ausgerichtet ist und in der Verschlussposition durch die Verschlussklappe (24) verschlossen ist und in der Freigabeposition zum Einführen des Gegenstands (16) freigegeben ist.

4. Verriegelungsvorrichtung nach Anspruch 3, wobei der Kunststoffansatz (18) einen ersten und einen zweiten Dichtring (42, 44) umfasst, die bei einem Spritzgießverfahren eingespritzt werden und aus einem weicheren Material als der Kunststoffansatz (18) sind, wobei die Verschlussklappe (24) in der Verschlussposition mit ihrem Rand am ersten Dichtring (42) anschlägt und wobei der Kunststoffansatz (18) mit dem zweiten Dichtring (44) am Rand der Öffnung (14) des Kraftfahrzeugs anschlägt.

5. Verriegelungsvorrichtung nach Anspruch 3 oder 4, wobei der Kunststoffansatz (18) ein Ventil (50) umfasst, das bei einem Spritzgießverfahren eingespritzt wird und aus einem weicheren Material als der Kunststoffansatz (18) ist und bei geschlossener Verschlussklappe (24) einen Druckausgleich zwischen dem Inneren der Öffnung (14) und der äußeren Umgebung gestattet.

## Revendications

1. Dispositif de fermeture pour une ouverture (14) prévu sur un véhicule automobile pour l'insertion temporaire d'un objet (16), comprenant :
- un volet de fermeture (24) pour l'ouverture (14), qui est supporté de manière pivotante sur un composant (18) entre une position de fermeture fermant l'ouverture, et une position de libération permettant l'insertion de l'objet (16), le volet de fermeture (24) étant précontraint dans la position de fermeture,
- un dispositif de verrouillage qui, dans une position de verrouillage, verrouille le volet de fermeture (24) dans la position de verrouillage et qui, dans une position de déverrouillage, déverrouille le volet de fermeture (24) de sorte que le volet de fermeture (24) puisse être pivoté de la position de fermeture dans la position de libération par l'objet (16) devant être inséré dans l'ouverture (14),
- le dispositif de verrouillage ayant au moins une saillie de verrouillage (32) faisant saillie depuis la surface extérieure (30) du volet de fermeture (24) dans la position de verrouillage, la saillie de verrouillage (32) étant précontrainte dans la position de verrouillage et pouvant être pressée dans la position de déverrouillage par une force exercée sur la saillie de verrouillage (32) par l'objet (16) lors de l'insertion dans l'ouverture (14), dans laquelle position de déverrouillage le volet de fermeture (24) est déverrouillé,
- le dispositif de verrouillage comprenant en outre au moins un taquet (34) faisant saillie par-dessus la circonférence du volet de fermeture (24) dans la direction radiale et s'engageant dans au moins un retrait (36) dans le composant (18) dans la position de verrouillage, ledit taquet (34), lors du mouvement de la saillie de verrouillage (32) dans la position de déverrouillage, étant ressorti du retrait (36) et rentré dans le volet de fermeture (24) et libérant ainsi le verrouillage, et
- la saillie de verrouillage (32) s'engageant avec l'au moins un taquet (34) par un élément de connexion (56) s'étendant à travers la surface externe (30) du volet de fermeture (24),
**caractérisé en ce que**
la saillie de verrouillage (32) peut pivoter conjointement avec l'élément de connexion (56) entre la position de verrouillage et la position de déverrouillage et s'engageant ainsi avec le taquet (34).

2. Dispositif de fermeture selon la revendication 1, dans lequel le taquet (34) est précontraint dans la position saillant par-dessus la circonférence du volet de fermeture (24) dans la direction radiale par un ressort (40), et dans lequel ce ressort (40) fournit également la précontrainte de la saillie de verrouillage (32) dans la position de verrouillage.

3. Dispositif de fermeture selon l'une quelconque des revendications précédentes, dans lequel le composant (18) est une fixation en plastique tubulaire (18) pour l'ouverture (14), ladite fixation en plastique tubulaire (18) comprenant une deuxième ouverture (22) alignée avec l'ouverture (14) dans le véhicule automobile, ladite deuxième ouverture (22) étant fermée par le volet de fermeture (24) dans la position de fermeture et étant libérée pour l'insertion de l'objet (16) dans la position de libération.

4. Dispositif de fermeture selon la revendication 3, dans lequel la fixation en plastique (18) comprend une première et une deuxième bague d'étanchéité (42, 44), qui sont injectées dans un processus de moulage par injection et qui sont en un matériau plus tendre que la fixation en plastique (18), le volet de fermeture (24) venant buter avec son bord contre la première bague d'étanchéité (42) dans la position de fermeture, et la fixation en plastique (18) venant buter contre le bord de l'ouverture (14) du véhicule automobile avec la deuxième bague d'étanchéité (44).

5. Dispositif de fermeture selon l'une quelconque des revendications 3 ou 4, dans lequel la fixation en plastique (18) comprend une soupape (50) injectée dans un processus de moulage par injection et étant en un matériau plus tendre que la fixation en plastique (18), ladite soupape, lorsque le volet de fermeture (24) est fermé, permettant une compensation de pression entre l'intérieur de l'ouverture (14) et l'environnement extérieur.
